# EUROPEAN PATENT APPLICATION

(11) **EP 0 814 290 A2**
(43) Date of publication of application: **29.12.1997**
(21) Application number: 96500142.3
(22) Date of filing: 07.11.1996
(51) Int. Cl.: F16K 21/12

(54) **Cock with time delayed closing**

(30) Priority: 21.06.1996 ES 9601702; 21.06.1996 ES 9601703
(71) Applicant: Metalgrup, S.A., 08970 Sant Joan Despi (Barcelona) (ES)
(72) Inventor: Montserrat, Juan, 08970 Sant Joan Despi (Barcelona) (ES)
(74) Representative: Gonzalez Gonzalez, Pablo

(57) **Abstract**

A timed cock optionally fitted with a bucket filter, consisting of providing a compensation chamber (2) with a conduit (12) communicating said chamber with inlet chambers (13), and having a movable watertight membrane (3) at the lower part of the inlet chambers (13), and there being on the external part of the pulse flywheel body (9), at predelimited distances, on the upper structure of the cock body, a regulation ring (8), fitted with a regulation thread (10), having an inner threaded perforation (11), for receiving a blocking screw (11'), and optionally incorporating a bucket filter (25) configured by a hollow body, the perimeter of which is constituted by a frame or case (25'), on which meshes or similar (25'') are fixed.

## Description

### BACKGROUND OF THE INVENTION

The present specification refers to a timed cock optionally - fitted with a bucket filter, the evident purpose of which is to act as a conventional timed cock, in which an element acting as an outer regulator of the volume of a compensation chamber is incorporated, by means of which the closing time control of the - timed cock is carried out, without the need of taking apart any device of the cock in question, which substantially makes easy - and simplifies the control and, at the same time, the control in the strict sense can be determined and exactly fixed second by second, giving an option to the user to choice any closing time, which is on the order of between 0 seconds and the maximum time - allowed by the manufacture in cuestion, the timed cock relying optionally on the possibility of incorporating a universal type - bucket filter that, although being qualified to be incorporated in any type of cocks, presents adequate characteristics for being particularly applied entirely to timed cocks, the filter being manufactured in a plurality of materials such as metallic, plastic, etc., and , according to its installation, anomalies in the mechanism of the cock in the strict sense can be obviated, this mechanism being inclined to being damaged by the entry of refuses, and consequently, it achieves to improve the performance of the cocks incorporating this type of filter, and thanks to their utilization, the accumulation of refuses which can produce, and in fact they - produce, an obstruction or blokage of the driving mechanism, can be avoided, this being the the reason for which all the failures at the cocks are practically caused; specially at the timed cocks.

### FIELD OF THE INVENTION

This invention finds its application within the industry devoted to the manufacture of cocks and their auxiliary elements.

### RELATED ART

The applicant does not know the existence, at present, of any timed cock fitted with the characteristics of the cock envisaged by invention.

Also, the applicant has no knowledge about the existence of a bucket filter, which, being capable of being applied to cocks in general, is specially designed to be directly applied to timed - cocks.

The application of the filter to the cock enables, even more, if possible, its performance, which, by itself, is appreciably improved in relation to the already known timed cocks.

### SUMMARY OF THE INVENTION

The timed cock optionally fitted with a bucket filter as proposed by the invention constitutes, itself, an evident novelty within its field of application, since, according to the incorporation in same of an outer regulating device of the volume of the compensation - chamber, it is possible to regulate or control the performance of the cock as regards its closing time, between a field on the order of 0 second and a maximum time as allowed by the manufacture, this being a cock that, in turn, can be implemented by the incorporation of the bucket filter, by means of which the possibilities that inside the mechanisms of the cocks in general and the timed cocks in particular are specifically obviated, refuses carried down by water in conventional channels can be deposited or introduced, these refuses being proved as the elements causing cock damage and failure.

In a most definite manner, the timed cock optionally fitted with a bucket filter, of the invention, is constituted as a conventional cock of the type known as timed cock, in which it has been anticipated that, upon pressing the pulse flywheel, the control shaft and all the inner system move in an automatic way, so achieving also an automatic decrease according to the acting of the volume of the compensation chamber, which generates the fact that - the liquid remaining from said compensation chamber passes thru a conduit towards the inlet chambers, the compensation chamber being reduced in a practically total volume.

When the user does not press the pulse flywheel, the liquid entering the cock thru the inlet chambers has two outlets, one of - them being destined to evacuate the greatest part of the entering - flow towards the outlet chamber, which communicates with the outlet mouths of the timed cocks; while the second one, with a lowest part of that flow, manages to pass thru the conduit towards the compensation chamber, due to the action of the differential of pressures existing between the empty compensation chamber, that is to say, - pressure 0 and the inlet chamber, i.e., pressure of line, beginning at that moment, a gradual displacement of all the inner system - that, firstly, has been driven in an opposite sense to the initial displacement, so the motion of the system being carried out according to the speed and time the compensation chamber takes in being full or equals its pressure with the inlet pressure when the timed cook is fully closed.

That is to say, the invention relies of the possibility of achieving, in a concrete way, a regulation from the exterior of the compensation chamber volume, which generates automatically a predelimited action of this type of cock, known as timed cock.

Optionally, the timed cock can be fitted with a bucket filter, which can be configured starting from a body adopting a bucket shape devoided, at its upper part, of one of its faces, the insertion of the cock body into the filter being carried out, and, consequently, the inner mechanism of the cock is perimeterly surrounded, at its lower part, with the web of the filter body, which is installed in the water inlet area, so achieving that the refuses carried away by the water deposit gradually on the mechanisms of the timed cocks, and, attaining, at the same time, upon eliminating the entering of refuses, an improvement as regards its performance of all type of cocks, specially of the timed cocks.

The cock itself can be manufactured of any material considered convenient, specially plastics, metallic, etc., and it has a plurality of perforations allowing the water to pass in an adequate way, but, nevertheless, avoiding the pass of particles that, as refuses, are carried away by the water flow in the conventional conduits of the network.

### BRIEF DESCRIPTION OF THE DRAWINGS

In order to complement this description and to aid to a better understanding of the characteristics of the invention, the appending drawings, which are a part of this specification, show, by way of illustrative and non-limiting example, the following figures:

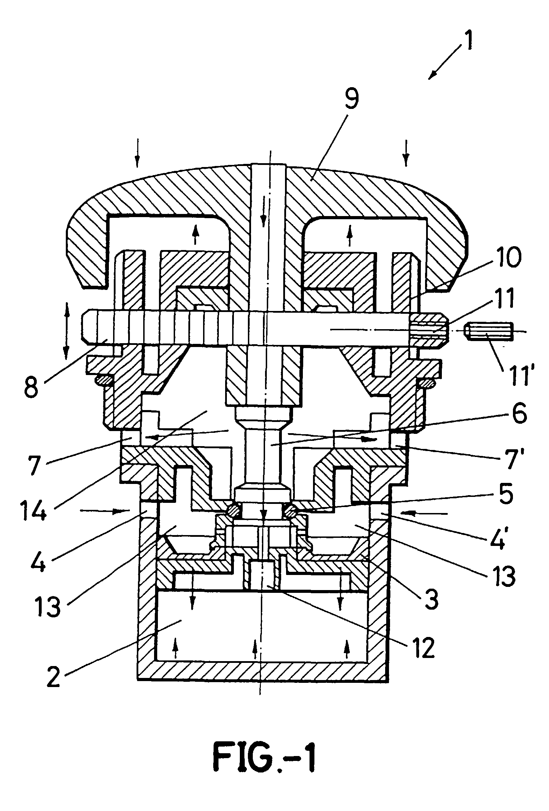

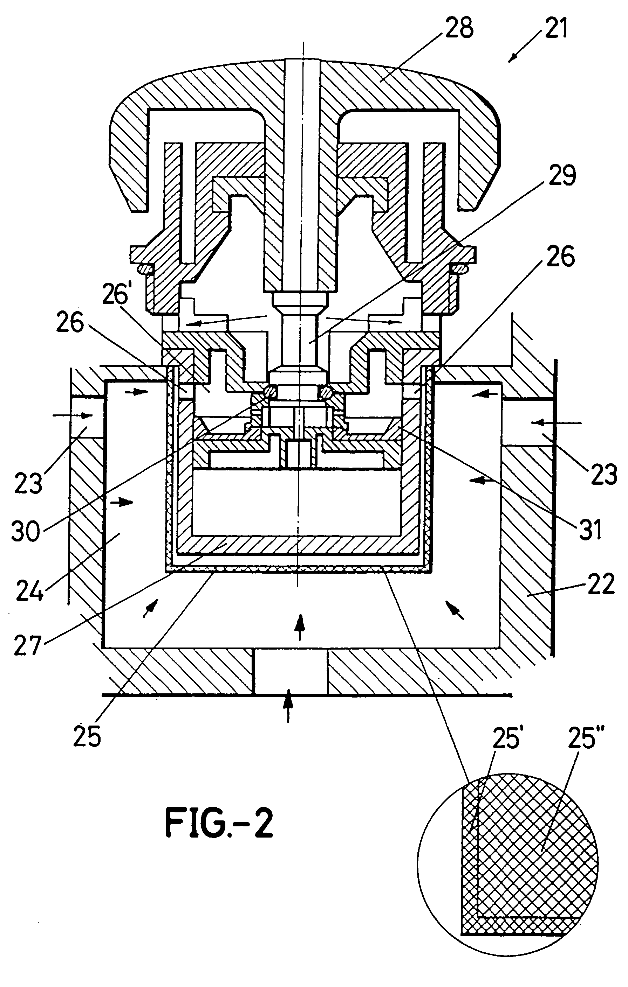

Figure 1 is a side elevational view duly sectioned of the timed cock, which is the object of the present invention in collaboration with the filter shown in Fig. 2, this figure showing the outer regulation device of the volume of the compensation chamber.
Figure 2 is a side elevational view of a timed cock, in which the bucket filter is incorporated in collaboration with the object shown in Fig. 1, so giving the result of the context of the invention, and this figure showing, in an evident way, the manner in which the bucket filter is inserted into the body receiving the water flow, thru a chanel or network.

### DETAILED DESCRIPTION OF THE PREFERRED EMBODIMENT

From the view of these figures, it can be seen that the timed cock optionally fitted with a bucket filter (1) relies on a pulse flywheel (9), joined to a control shaft (6), the control shaft (6) having, at the lower part of the control shaft (6), an O ring (5), and when pressing the pulse flywheel (9), the control - shaft (6) and all the inner assembly of the timed cock (1) gradually move, so achieving to decrease the volume of the compensation chamber (2), with which the remaining fluid from the compensation chamber (2) passes via the conduit (12) towards the inlet chambers (13), the compensation chamber (2) reducing its volume practically in its entirety.

When the pulse flywheel is not pulsed (9), the fluid entering into the cock (1) via the inlets (4) and (4') towards the inlet - chambers (13), has two outlets (7) and (7'), thru which, and specifically, thru one of them having a large diameter, its flow passes, partially, towards the outlet chamber (14), this chamber communicating with outlet mouths (7) and (7') of the timed cocks, and the second one can pass thru same, part of this flow passing thru the conduit (20) towards the compensation chamber (2) by the action of a pressure differential between the empty compensation chamber (2), with a pressure 0, and the inlet chambers (13) in which there is a line pressure, and at this moment, a displacement begins in an opposite sense to that carried out firstly in the whole inner assembly previously driven in an opposite sense, and acting on the speed and time the compensation chamber (2) takes in being full and equalizes its pressure with the inlet pressure passing thru the inlets (4) and (4'), this being the moment at which the time cock (1) is fully closed.

According to the above described, it is possible to have a timed cock on which, it can be carried out, in a precise manner, second by second, its closing between the field comprised from 0 second until the maximum envisaged by the manufacturer as regards the timed distibuted by him.

It should be pointed out that the invention relies on a regulation ring (8) having, on a side, a regulation thread (10), above which a perforation (11) is incorporated and within which a blocking screw (11') is inserted.

Inside the cock, and at the lower portion of the inlet chambers (13), a movable watertight membrane (3) has been provided.

In synthesis, it must be noted that the mounting of the timed cocks houses a regulation ring (8) having, as previously mentioned, a blocking screw (11'), inserted into a fine pitch thread - (10), and in a housing (11), the assembly of said elements being performed at the lower part of the pulse flywheel (9).

As the distance between the regulation ring (8) and the pulse flywheel decreases or increases, the possibility that the inner - mechanism moves to a great or small extent increases or decreases. Consequently, the volume of the compensation chamber (2) is perfectly controlled by a motion carried out from the exterior without no need to perform any other type of operation, since the mere operation carried out by the pulse flywheel (9) makes the inner system or mechanism to move until the pulse flywheel (9) leans against a stop arranged in advance, constituted by the regulation ring, which will be blocked with the blocking screw (11'), in order to avoid unintended displacements which could consequently upset the time set by an user.

The operation on the screw (11') is performed by a conventional spanner, the time being adjusted to the need of its application to public lavatories, washbasins, showers, and so on, being not necessary for the manufacturer to impose, beforehand, the time the timed cock is to be opened.

Figure 2 shows how the invention is configured as a time cock fitted with a bucket filter, which is constituted starting from a body (25) having a structure (25'), which has, at its perimeter, at the lower side part, a plurality of perforations (25'').

Inside the body (25) constituting the filter, there is located an end of the timed cock, corresponding, specifically, to its lower area forming the compensation chamber (32), located at the inner portion of the body (27), above which the elements separating the compensation chamber (32) from the area corresponding to the inlet chambers (26') are arranged. These chambers have inlets (26) thru which the fluid entering the main body (22) thru the perforations (23) pass inside the body (27), at the area corresponding to the inlet chambers (26'), and within the timed cock (21) there is arranged an O-ring (30) leant against the lower part of shaft (29) which is operated by the pulse flywheel (28).

Consequently, the refuses possibly carried down by the fluids passing thru the perforations (23) inside (24) the body (22) are retained at the external structure of the bucket filter (25) in accordance with its installation around the main body (27) which constitutes the lower part of the timed cock (21), there being a movable watertight membrane (31) within the body.

## Claims

1. A timed cock optionally fitted with a bucket filter,of those constituted starting from a body having a control shaft (6) inside, attached to a pulse flywheel (9), the control shaft (6) having, at its lower part, an O-ring (5'), and the timed cock (1) having inside an inlet chamber (13), fitted with inlets (4) and (4'), and relying, at the same time, on outlet chambers (14) having outlets (7) and (7'), having, at its lower portion, a compensation chamber (2), **characterized** in that the Compensation chamber (2) has a conduit (12) communicating said compensation chamber (2) with the inlet chambers (13), and the inlet chamber (13) having, at its lower part, a movable water-tight membrane (3), it being fixed on the external area of the pulse flywheel body (9), at predelimited distances on the upper structure of the cock, a regulation ring (8), fitted with a regulation thread (10) having an inner threaded perforation (11), into which a blocking screw (11') is inserted.

2. A timed cock optionally fitted with a bucket filter, according to claim 1, **characterized** in that, in accordance with the fastening of the regulation ring (8) on the external area of the cock body (1) at the lower part of the pulse flywheel, this will move towards the interior, and with it, the mechanism till the lower part of the pulse flywheel will lean - against the regulation ring, this being the moment at which the pulse flywheel and the mechanism fixed to it moves back towards its original position due to the effect generated between the compensation chamber (2) and the inlet chamber (13), which are communicated thru the conduit (12).

3. A timed cock optionally fitted with a bucket filter, according to any of the preceding claims, optionally applicable to timed cocks (21) constituted by a body (27), inside which there are arranged the compensation chamber and the elements separing this compensation chamber from the inlet chamber (26'), fitted with perforations acting as an inlet (26), there being, on the separating body, a movable watertight membrane (31), and an O-ring (30) around the lower part of the shaft (29), the shaft (29) being attached to the pulse flywheel (28), **characterized** in that the bucket filter (25) is configured as a hollow body, the perimeter of which being formed by a frame or case (25'), on which meshes or similar (25'') are installed, which are provided witha multiperforation, the body (25) being incorporated inside a receptable (2) fitted with perforations acting as inlets (23) for the network fluid.
